# EUROPEAN PATENT APPLICATION

(11) **EP 4 852 445 A1**
(43) Date of publication of application: **09.12.2026**
(21) Application number: 25382574.9
(22) Date of filing: 04.06.2025
(51) Int. Cl.: H04Q 11/00, H04J 14/02

(54) **SWITCH ARCHITECTURES**

(71) Applicant: IPronics Programmable Photonics S.L., 46010 València (ES)
(72) Inventor: Torrijos-Morán, Luis, 46010 València (ES); Pérez-López, Daniel, 46010 València (ES)
(74) Representative: Barker Brettell LLP

(57) **Abstract**

A photonic switching architecture comprises a first I/O array of switching cells 612 providing a plurality of pairs of first ports 1-n; a second I/O array of switching cells 614 providing a plurality of pairs of second ports 1'-n'; a plurality of switching cells 610 connected between the two I/O arrays and arranged to provide pairs of channels, each pair of channels connecting one of the pairs of first ports 1-n to one of the pairs of second ports 1'-n'; wherein . The switching cells 610, 612,614 are operable to connect each of the pairs of first ports 1-n selectively to any respective one of the pairs of second ports 1'-n' via a respective pair of the channels.

## Description

### Field of the Invention

The present invention relates to switch architectures. It has particular application in bidirectional switch architectures and split polarization switch architectures.

### Background to the Invention

Artificial Intelligence (AI) innovation is facing a rapid and worldwide growth. The extensive deployment of AI technology across multiple industries is the main catalyst of an unprecedented increase in power consumption within datacentres. Such a sudden increase in power demand implies that datacentres will need to dramatically increase their efficiency and scalability. The traditional systems comprising only a few General Processing Units (GPUs) are no longer sufficient to process and compute the most recently programmed AI models, and the scalability limitations of these systems is significant.

In this context, there is an unprecedented demand for highly scalable, high-radix switch architectures, also referred to as meshes, to be integrated within networking devices for connecting computing resources of multiple datacentres.

Conventional photonic switching meshes are only operated in one direction, having on one side the input ports and on the other side the output ports. Duplex communication systems provide two-way communication between two points (A, B), where each point transmits information to the other, and receives information from the other.

Polarization Management refers to the challenge of handling optical signals with random polarization states. In certain optical communication protocols, information can be transmitted using both polarization states of the optical signal. In Intensity-Modulation Direct-Detection (IM-DD) systems, although the signal is initially launched into the fibre with a single polarization, the fibre alters its polarization state, resulting in a random polarization at the output. Similarly, in coherent communication systems, information is carried in two orthogonal polarization states, typically transverse-electric (TE) polarization and transverse-magnetic (TM) polarization, effectively doubling the channel capacity.

Datacom signals in data centres carry information between two points within two fibres, the first one transmitting (Tx) from point A and second one receiving (Rx) from point B to A. Therefore, once the communication channel between A and B has been established, both Tx and Rx need to be connected between end-to-end points.

With prior art, optical switches are unidirectional by nature. This calls for two switches of NxN radix to connect N nodes with independent bidirectional links. The resulting devices do not scale efficiently in number of cells.

Additionally, optical switches integrated on photonic integrated circuits are normally designed and optimized to work in a single polarization state. This results in integrated systems limited to handling single polarization communications. The current way to provide split polarization transmissions involves splitting the polarization state at the input of the system, duplicating the hardware to process the two polarization states independently and combining the polarizations at the output. This architecture, referred to as polarization diversity, requires the duplication of the hardware blocks, limiting the scalability and increasing the complexity of the device.

At present, the limitations of networking switches for datacentres remain considerable. In particular, no solution has been presented for a high-radix high-capacity switch architecture whose performance and scalability can meet the new demands imposed by the extensive use of applications demanding big data movements.

The present invention sets out to alleviate these problems, and to provide a scalable high-radix switch architecture that is suitable for use in future datacentres, artificial intelligence infrastructure and high-performance computing.

### Summary of Invention

In this invention, we design a new switching network which has paired ports on each side with each pair of ports on one side being connectable to one of the pairs of ports on the other side via a pair of channels. The network may be a bidirectional switching network that has both input and output ports at both sides, allowing for bidirectionality of light signals in a non-blocking architecture. This has particular interest in data centre applications, as transceivers work under duplex communication systems. Alternatively the network may be a split polarization switching network, allowing switching of pairs of polarization components, again in a non-blocking architecture.

The present invention, benefits from interconnect standards to design a non-blocking switching network with a fewer number of switching cells while enabling an efficient bi-directional communication and/or polarization management.

According to the present invention there is provided a photonic switching architecture comprising: a first I/O array of switching cells providing a plurality of pairs of first ports; a second I/O array of switching cells providing a plurality of pairs of second ports; a plurality of switching cells connected between the two I/O arrays and arranged to provide pairs of channels, each pair of channels connecting one of the pairs of first ports to one of the pairs of second ports; wherein the switching cells are operable to connect each of the pairs of first ports selectively to any respective one of the pairs of second ports via a respective pair of the channels.

The architecture may comprise a switching network having a first array of four I/O switching cells on a first side, a second array of four I/O switching cells on a second side and a plurality of intermediate switching cells between the first and second arrays, with each of the I/O switching cells connected to two of the intermediate switching cells, the architecture further comprising: four further I/O switching cells on the first side each of which is connected to the two of the intermediate cells to which a respective one of the first array of I/O switching cells is connected.

The switching network may be a switch and select network or a dilated Banyan network.

The architecture may comprise a double layer switching network having a first array of four I/O switching cells on a first side, a second array of four I/O switching cells on a second side and a plurality of intermediate switching cells between the first and second arrays, the architecture further comprising a further array of four further I/O switching cells on the first side of the first array of I/O switching cells, wherein each of the further I/O switching cells is a 2x2 switching cell connected to two cells of the first array of I/O switching cells.

There may be n/2 pairs of first ports and n/2 pairs of second ports, the architecture comprising four n/2 x n/4 switching networks, a first array of I/O switching cells connected to a first side of the four switching networks and a second array of I/O switching cells connected to a second side of the four switching networks, where n is an integer number, and may be a power of 2.

Each of the first array of I/O switching cells may be connected either to the first and second of the switching networks or the third and fourth of the switching networks, and each of the second array of I/O switching cells may be connected either to the first and third of the switching networks or the second and fourth of the switching networks.

Each of the pairs of channels may be arranged to transmit signals in opposite directions between one of the pairs of first ports and one of the pairs of second ports.

Each of the pairs of channels may be arranged to transmit two different polarization components of a signal between one of the pairs of first ports and one of the pairs of second ports, typically with polarization rotation elements at each end of one of the channels.

The pairs of first ports may be paired into groups of four first ports, the pairs of second ports may be paired into groups of four second ports, and the pairs of channels may be paired into groups of four channels. Each channel of each group of four channels may be arranged to transmit a respective polarization component of signals in a respective direction between one of the groups of four first ports and one of the groups of four second ports.

The channels are divided into two groups, and each pair of channels comprises one channel from each group.

The switching architecture may comprise, in any workable combination, any one or more features of the embodiments of the invention shown in the drawings as will now be described.

### Brief Description of the Drawings

**Figure 1** is a diagram of a known switch and select switching architecture;
**Figure 2** is a diagram of a known dilated banyan switching architecture;
**Figure 3** is a diagram of a known double layer switching architecture;
**Figure 4** is a diagram of a bidirectional switching architecture;
**Figure 5** is a diagram of a basic building block of a dilated banyan switching architecture;
**Figure 6** is a diagram of a bidirectional dilated banyan switching architecture;
**Figure 7** is a diagram showing the ports of a bidirectional switching architecture;
**Figure 8** is a diagram showing the relationship of transmit and receive ports in the architecture of Figure 7;
**Figure 9** is a diagram showing the ports of a bidirectional dual polarization switching architecture;
**Figure 10** is a diagram showing the relationship of the different types of ports in the architecture of Figure 9;
**Figure 11** is a diagram of a bidirectional switch and select switching architecture;
**Figure 12** is a diagram of a bidirectional dilated banyan switching architecture;
**Figure 13** is a diagram of a bidirectional double layer switching architecture; and
**Figure 14** is a diagram of a bidirectional dilated banyan switching architecture.

### Detailed Description

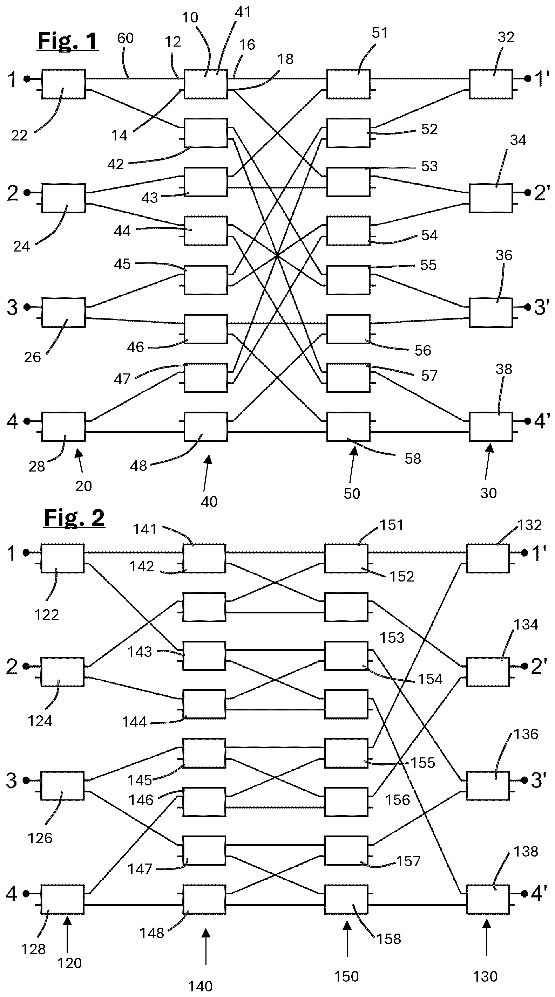

Referring to Figure 1, a known switch and select switching architecture with four input ports 1, 2, 3, 4 and four output ports 1', 2', 3', 4', is generally referred to as a 4x4 architecture or mesh. The mesh is made up of switching cells 10. Each of the cells is typically a 2x2 switching cell having two ports 12, 14, 16, 18 on each side and having two states. In one state the cell 10 connects the first port 12 on one side to the first port 16 on the other side and the second port 14 on the one side to the second port 18 on the other. In the other state the first port 12 on the one side is connected to the second port 18 on the other side and the second port 14 on the one side is connected to the first port 16 on the other side. However for each of the cells 10 one of the ports 14 can be left unused so that there is only one operational port 12 on one side which can be connected to either of the ports 16, 18 on the other side.

The architecture in Figure 1 is a 4x4 switch and select architecture having an input array 20 of four switching cells 22, 24, 26, 28 and an output array 30 of four switching cells 32, 34, 36, 38. A first layer 40 of cells 41, 42, 43, 44, 45, 46, 47, 48 is arranged in a linear array and each has one of its two input ports connected to a respective output port of one of the cells 22, 24, 26, 28 input array. A second layer 50 of cells 51, 52, 53, 54, 55, 56, 57, 58 is arranged in a linear array and each has one of its two output ports connected to a respective output port of one of the cells 32, 34, 36, 38 of the output array 30. The connections are via waveguides 60, typically silicon channels formed on the chip between the switching cells, which transmit the optical signals between the ports and switching cells. The linear arrays of the first and second layers 40, 50 are arranged parallel to each other with their cells equally spaced so that each cell of the first layer 40 is aligned with a corresponding cell in the second layer 50. Each of the first layer 40 of cells 41, 42, 43, 44, 45, 46, 47, 48 has its two output ports connected respectively to one of the input ports of two different cells in the second layer 50 of cells 51, 52, 53, 54, 55, 56, 57, 58. Each of the cells 22, 24, 26, 28 of the input array 20 is connected to two adjacent cells in the first layer 40, and each of the cells in the output array 30 is connected to two adjacent cells in the second layer 50. The cells of the first and second layers are connected to each other in groups of four cells. Each group is made up of two cells 41, 43 in the first layer which are separated by one cell 42 which is not in the group, and two cells 51 53 in the second layer, which are separated by a cell 52 which is also not in the group. The first and third cells of both layers 41, 43, 51, 53 form one group. The sixth and eight cells of both layers 48, 48, 56, 58 form another group. The second and fourth cells 42, 44 in the first layer 40 and the fifth and seventh cells 55, 57 in the second layer 50 form another group and the fifth and seventh cells 45, 47 in the first layer 40 and the second and fourth cells 52, 54 in the second layer 50 form another group. In each group the two outputs of each of the two cells in the first layer are connected to one of the inputs of a respective one of the two cells in the second layer. This architecture is symmetrical and so the input and output sides can be swapped arbitrarily.

It should be noted that the cells in each layer are identified by their position in the layer starting at a first end of the network, which is the top end in Figure 1, but could equally be the bottom end. The first cell in each layer is therefore the cell at one end of the layer and the last cell in the layer is the cell at the opposite, second, end of the layer. The numbering of switching cells, or networks of cells within an overall architecture, throughout this description will follow this convention unless indicated otherwise.

Referring to Figure 2, another 4x4 switch architecture is the dilated banyan architecture. This has an input array 120 of four cells 122 ,124, 126, 128 and an output array 130 of four cells 132, 134, 136, 138, a first layer 140 of cells 141,142, 143, 144, 145, 146, 147, 148 and a second layer 150 of cells 51, 52, 53, 54, 55, 56, 57, 58 laid out in the same way as the switch and select architecture of Figure 1. The connections between the cells are the similar, except for the differences which will now be described. Each cell of the input array 120 is connected to two cells of the first layer which are not adjacent but spaced apart by one cell, i.e. having one cell between them. Each cell of the output array 130 is connected to two cells of the first layer which are not adjacent but spaced apart by three cells, i.e. having three cells between them. The cells in the first and second layers 140, 150 are again connected together in groups of four cells, but in this case each group comprises two adjacent cells in the first layer and the corresponding two adjacent cells in the second layer 150. The connections between the four cells in each group are the same as in the switch and select architecture of Figure 1. This architecture is not symmetrical, but can operate in either direction, i.e. with references to input and output in the above description swapped.

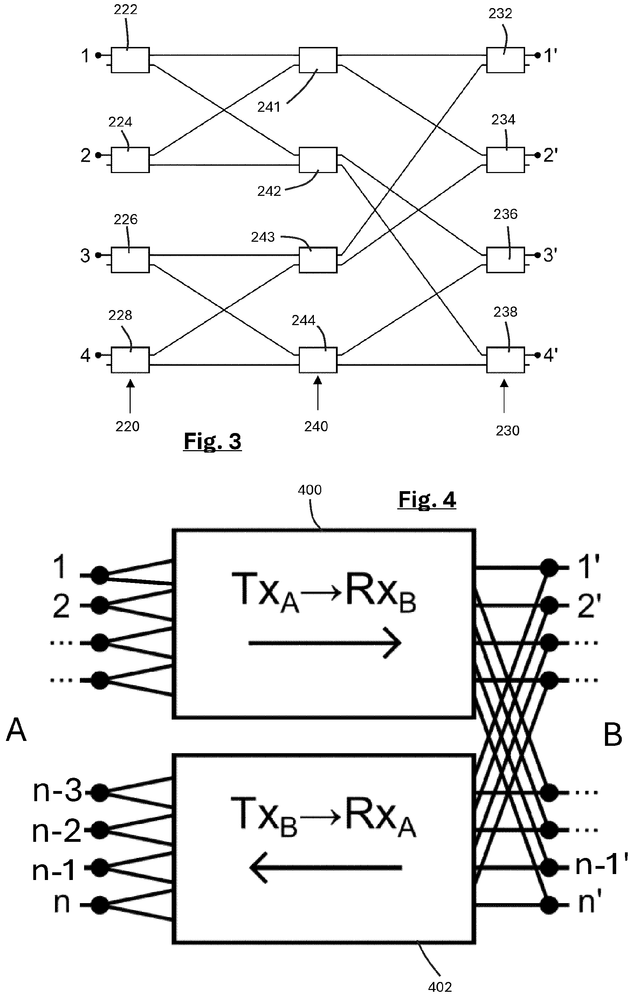

Referring to Figure 3, another 4x4 switch architecture is the double layer architecture. This again has an input array 220 of four cells 222, 224, 226, 228, and an output layer 230 of four cells 232, 234, 236, 238. In this case there is only one intermediate layer 240 of cells between the input and output arrays, that layer 240 having four cells 241, 242, 243, 244. The inputs of each of the first two cells 241, 242 in the intermediate layer are connected to respective outputs of the first two cells in the input array 220. The inputs of each of the last two cells 243, 244 in the intermediate layer are connected to respective outputs of the last two cells in the input array 220. The outputs of each of the first and third cells 241, 243 in the intermediate layer are connected to respective inputs of the first two cells in the input array 220. The inputs of each of the last two cells 243, 244 in the intermediate layer are connected to respective outputs of the last two cells in the input array 220. This architecture is not symmetrical, but can operate in either direction, i.e. with references to input and output in the above description swapped.

All of the architectures of Figures 1 to 3 are strictly non-blocking, which means that each of the input ports can be connected simultaneously to a respective one of the output ports by a respective channel, which does not share any connecting waveguides 60 with any of the other channels, and also that any one input port can be connected to any one output port without the need to re-arrange any established connections between other input and output ports.

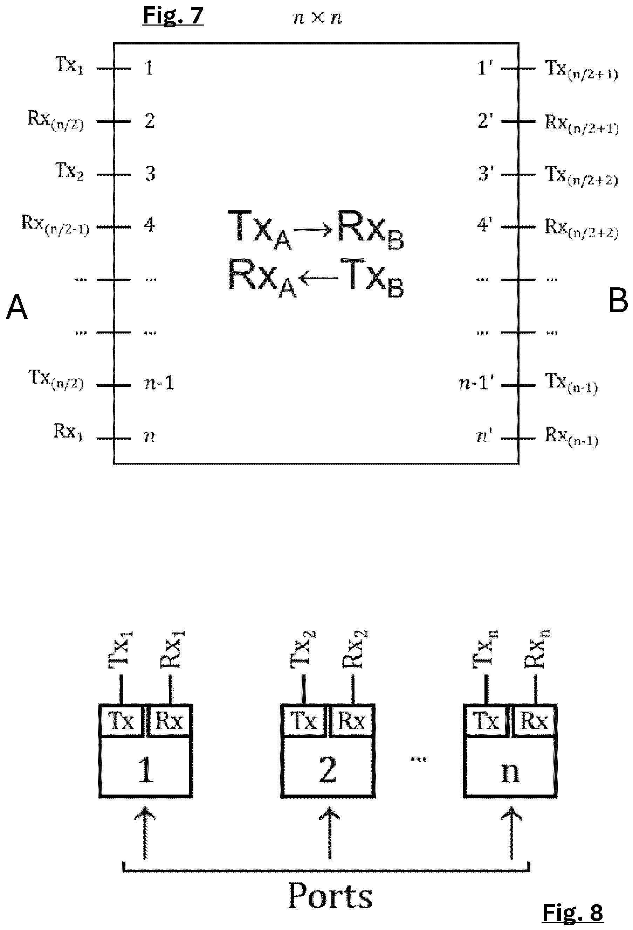

Referring to Figure 4, a bidirectional switching network between two points A and B requires a set of n ports 1-n on the first side A, and a set of n ports 1' to n' on the second side B. For two-way communication the ports on each side are grouped into pairs, each pair comprising a transmit port and a receive port, and the network needs to be able to connect any of the pairs on the first side A with any of the pairs on the second side B. If the channels are defined as two groups, a first group 400 for transmitting from A to B and a second group 402 for transmitting from B to A, then each pair of ports on the first side A must be connectable to each pair of ports on the second side B via at least one channel of the first group 400 and one channel in the second group 402. In the arrangement of Figure 4, the pairs could be for example as described below with reference to Figure 7.

In the bidirectional switching network as shown in Figure 4, the first group of channels 400 are shown as completely separate from the second group of channels 402. Specifically, each of the ports 1-n and 1' to n' is connected to an I/O switching cell, so that there is an array of I/O switching cells on each side A and B, but the other switching cells, typically arranged in layers between the I/O arrays, are in two separate groups with each of the groups of switching cells forming one of the groups of channels 400, 402, each within a respective area of the network. However in other arrangements, some parts of the switching network may be arranged to carry signals in one direction, in one switching state, and in the opposite direction in another switching state, whilst still providing a fully non-blocking configuration.

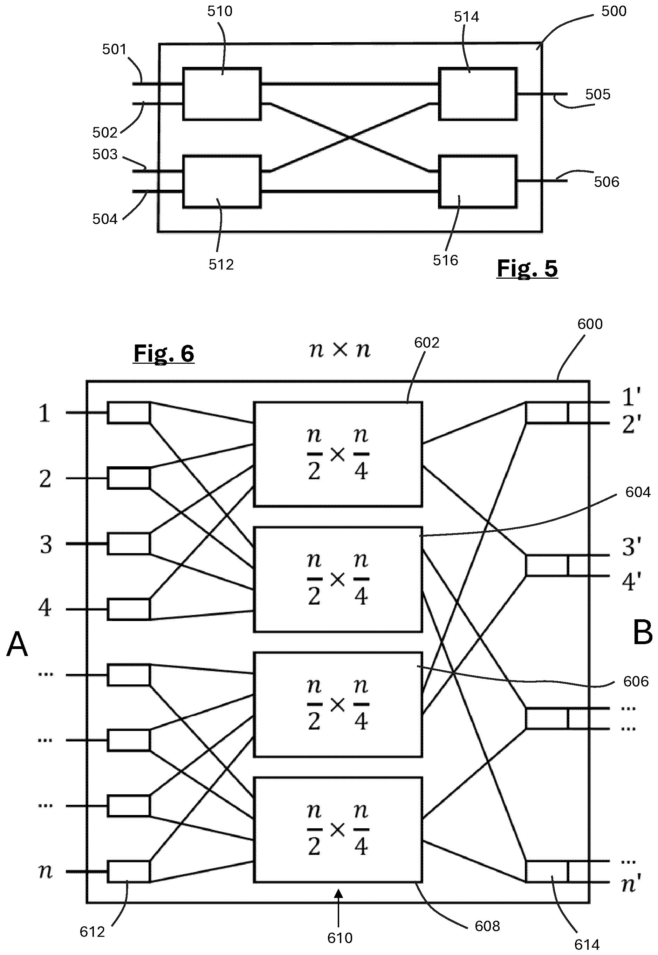

Referring to Figure 5, taking as an example the dilated banyan configuration, the basic building block of a bidirectional network is a 4x2 block 500, having four ports 501, 502, 503, 504 on a fist side, and two ports 505, 506 on the second side. The two ports 505, 506 on the second side can be connected to any combination of two of the ports 501, 502, 503, 504 on a fist side. This block 500 may be made up of a first pair of cells 510, 512 and a second pair of cells 514, 516. The first pair 510, 512 are each a 2x2 switching cell, and the second pair 514, 516 are each a 1x2 cell. As discussed above each 1x2 cell may be constructed as a 2x2 cell with one port left unconnected. The ports on the first side of the first pair of cells form the four ports 501, 502, 503, 504 on the first side, and the single port on the second side of the second pair of cells forms one of the ports 505, 506 on the second side.

Referring to Figure 6, to build up an nxn bidirectional network 600, for example wherein n is 8 in the example shown, corresponding to the network of Figure 4, with n/2 pairs of ports on each side, four n/2 x n/4 blocks 602, 604, 606, 608, each being a block 500 as shown in Figure 5 if n = 8, are provided in a row to form a central block 610, all having their first sides with n/2 ports on a first side of the central block 610 and their second side having n/4 ports on a second side of the central block. A first linear I/O array of n 1x2 cells 612 is connected to the 2n ports on the first side of the central block 610. A second linear I/O array of n/2 2x2 cells 614 is connected to the n ports on the second side of the central block 610. The first n/2 1x2 cells 612 in the I/O array each have one of their second ports connected to the first n/2 x n/4 block 602 and one to the to the second n/2 x n/4 block 604. The second n/2 1x2 cells 612 in the I/O array each have one of their second ports connected to the third n/2 x n/4 block 606 and one to the to the fourth n/2 x n/4 block 608. The n/2 cells 614 in the second I/O array each have their two ports on the first side connected to a port on the second side of two respective different n/2 x n/4 blocks. Specifically the first n/4 2x2 cells 614 are each connected to the first and third 4x2 blocks 602, 606, and the second n/4 2x2 cells 614 are connected to the second and fourth 4x2 blocks 604, 608. If only one port on the second side B of each cell 614 in the second I/O array 614 is used, this results in an n x n/2 network. In the example shown, this 8x4 network, which includes four 4x2 networks, can then be used as a building block to scale up again to a 16x8 network. This is done by using four 8x4 networks as the n/2 x n/4 blocks 602, 604, 606, 608 in a structure corresponding to that of Figure 6 with n = 16. This scaling up can be repeated to scale up to any value of n, more specifically any value of n which is an integer power of 2. At the end of the scaling process the n x n/2 network can be converted to an n x n network by using the additional port on the second side of the second I/O array of 2x2 switches. For example as shown in Figure 6, if n=8 i.e. 8x8 network is required, both ports on the second side B of each cell 614 in the second I/O array 614 is used. The ports on the two sides of the 8x8 network, or indeed the n x n network for other values of n, may be paired together in the same way as those in Figure 4 to form a paired port switching network.

While typically switching architectures are constructed having n ports on each side, i.e. nxn networks where n is a power of two, networks with fewer ports, i.e. not a strict power of two on each side, can also be constructed simply by omitting part of a full nxn architecture.

In the arrangement of Figure 6 it will be noted that the first and second n x n/2 blocks 602, 604, correspond to the first group of channels 400 in Figure 4, and the third and fourth n x n/2 blocks 606, 608 correspond to the second group of channels 402 in Figure 4.

Referring to Figure 7, as described above with reference to Figure 4, the set of n ports 1-n on the first side A are associated in pairs, and a set of n ports 1' to n' on the second side B are associated in pairs. Each pair comprises a transmit port Tx and a receive port Rx. For an n x n network there are n/2 pairs on each side or n pairs in total. The first pair on the first side A comprises the two end ports Tx₁ and Rx₁, another pair comprises the ports adjacent to those two, Tx_{(n/2)} and Rx_{(n/2)}. The first pair on the second side B comprises the two ports at one end Tx_{(n/2+1)} and Rx_{(n/2+1)}, another pair comprises the two ports adjacent to those two Tx₍ₙ₋₁₎ and Rx₍ₙ₋₁₎.

Referring to Figure 8, each pair of ports, comprising one transmit port Tx and one receive port Rx, can be considered as a duplex transceiver port. As mentioned above, on an n x n switching network there are n duplex ports in total with n/2 duplex ports on each side of the switching network. It will be noted that the transmit Tx and receive Rx ports in any one pair are not necessarily next to each in the layout of Figure 7. In particular those pairs on the first side A are not adjacent to each other. Connections are therefore provided between the two ports, for example Tx₁ and Rx₁ and the duplex port 1 shown in Figure 8.

It will be appreciated that, in the paired port embodiments shown in Figures 4 to 8 the pairs of ports and the pairs of channels that connect them through the switching network are used for two-way communication. In alternative arrangements the paired port configuration is again used, in which the ports and channels are associated in pairs in exactly the same way, but each pair is used for one-way communication of two polarization components TE and TM of an optical signal. In this case a polarization splitter and a polarization rotator are provided on the input side to separate a signal into TE and TM components and rotate one of those components, and corresponding polarization rotator and combiner are provided on the output side to rotate one of the polarization components so that they are again orthogonal and re-combine them.

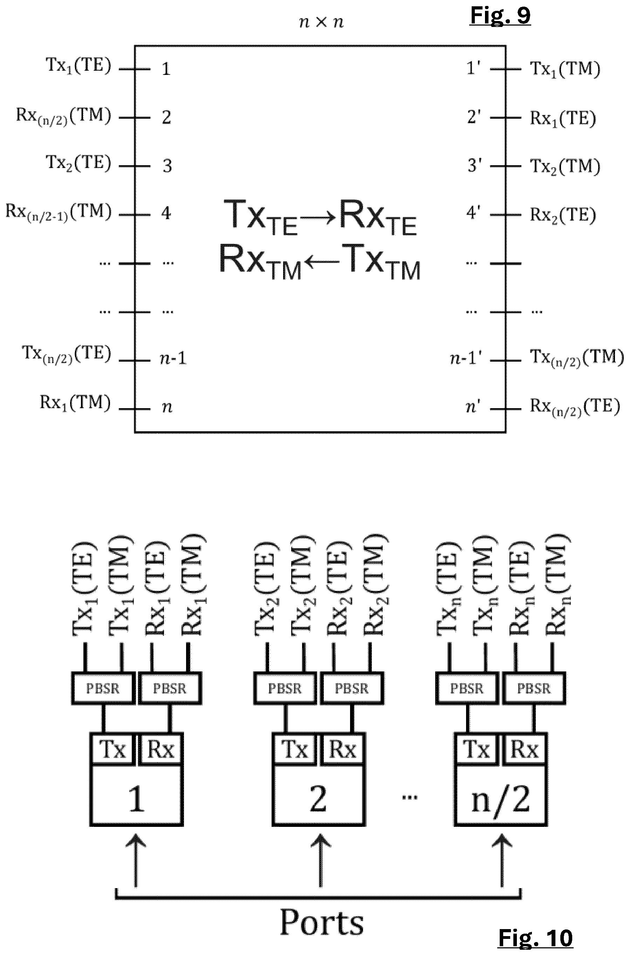

Referring to Figures 9 and 10, the switching network may be used for two-way communication of two polarization components TE and TM. This means that the ports of the switching network are grouped together in fours to provide one port each for transmission and reception of both polarization components. For example the first group comprises ports Tx₁ (TE), Tx₁ (TM), Rx₁ (TE), and Rx₁ (TM). It will be noted that, in the arrangement of Figure 9, this group of ports is provided by ports 1, 1', n, and 2', i.e. two ports from each side of the switching network. Similarly the ports Tx_{n/2}(TE), Tx _{n/2}(TM), Rx_{n/2}(TE), and Rx _{n/2}(TM) are provided by ports n-1, n-1', n' and 2. Since each group of four ports comprise two ports on each side of the network, each group of four ports can be connected to any other group of four ports to provide bidirectional split polarization communication.. It will be appreciated that any of the paired port switching architectures described herein can be used for bidirectional split polarization communication because the grouping of the pairs of ports together into groups of four ports reduces the number of switching combinations that are used.

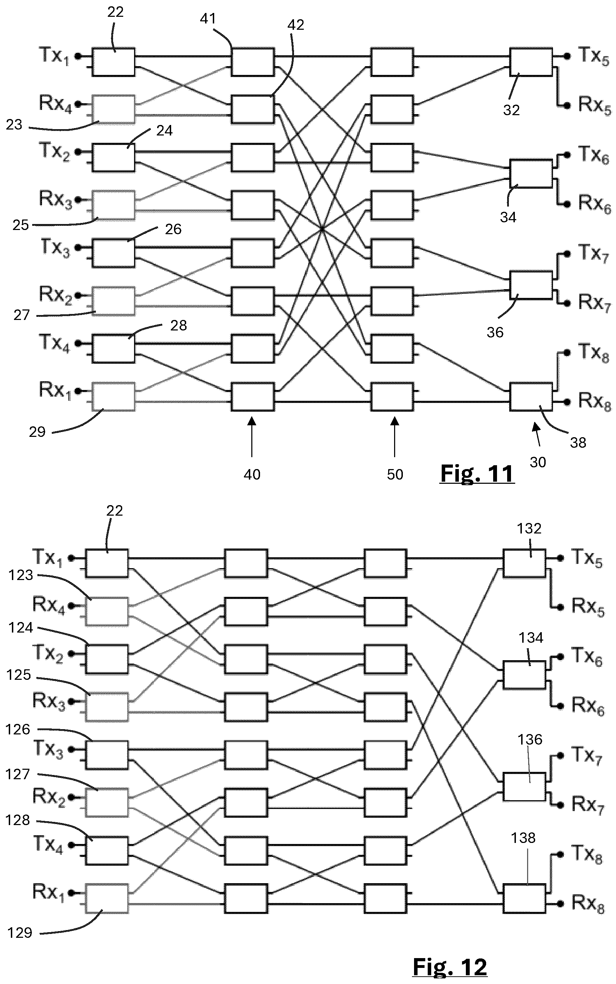

Referring to Figure 11, an 8x8 paired port switching architecture, which may be a bidirectional switching architecture, or split polarization switching architecture, may be based on the switch and select architecture of Figure 1. It includes all of the switching elements and connections of Figure 1, which are indicated by the same reference numerals and will not be described again. However to double the number of ports on each side, each of the switching cells 32, 34, 36, 38 on the second side B has both of the ports on its second side forming a port of the switching network. The four switching cells 32, 34, 36, 38 therefore provide eight ports in total. On the first side A of the network, where each of the four switching cells 22, 24, 26, 28 is connected to a pair of cells in the first layer 40, a further 1x2 cell 23, 25, 27, 29 is provided with the one port on its first side forming a further port of the network, a receive port in the arrangement shown, and the two ports on its second side connected to the same pair of cells in the first layer 40. Therefore each cell in the first pair of cells 41, 42 in the first layer 40 has one port connected to each of an associated pair of 1x2 cells 22, 23 in the I/O array 20. The eight ports on the first side A may be paired in the same way as described above with reference to Figure 7 or Figure 9, and the eight ports on the second side B may be paired together as described above with reference to Figure 7 or Figure 9.

As with the arrangement of Figure 6, the network of Figure 11 can be used as a basic block for scaling up. If this is to be done, one of the ports on the second side of each of the switching cells 32, 34, 36, 38 on the second side B of the network is not used, so those switching cells 32, 34, 36, 38 are operated as 2 x 1 cells, and the network operates as an 8 x 4 network. This can then be scaled up by combining four of these networks together and adding further cells as shown in Figure 6.

Referring to Figure 12, an 8x8 bidirectional switching architecture, or split polarization switching architecture, may be based on the dilated banyan architecture of Figure 2. It includes all of the switching elements and connections of Figure 2, which are indicated by the same reference numerals and will not be described again. However to double the number of ports on each side, each of the switching cells 132, 134, 136, 138 on the second side B has both of the ports on its second side forming a port of the switching network. The four switching cells 132, 134, 136, 138 therefore provide eight ports in total. On the first side A of the network, where each of the four switching cells 122, 124, 126, 128 is connected to a pair of cells in the first layer 140, a further 1x2 cell 123, 125, 127, 129 is provided with the one port on its first side forming a further port of the network, a receive port in the arrangement shown, and the two ports on its second side connected to the same pair of cells in the first layer 140. Therefore each cell in the first pair of cells 141, 142 in the first layer 140 has one port connected to each of an associated pair of 1x2 cells 122, 123 in the I/O array 120. The eight ports on the first side A may be paired in the same way as described above with reference to Figure 7 or Figure 9, and the eight ports on the second side B may be paired together as described above with reference to Figure 7 or Figure 9.

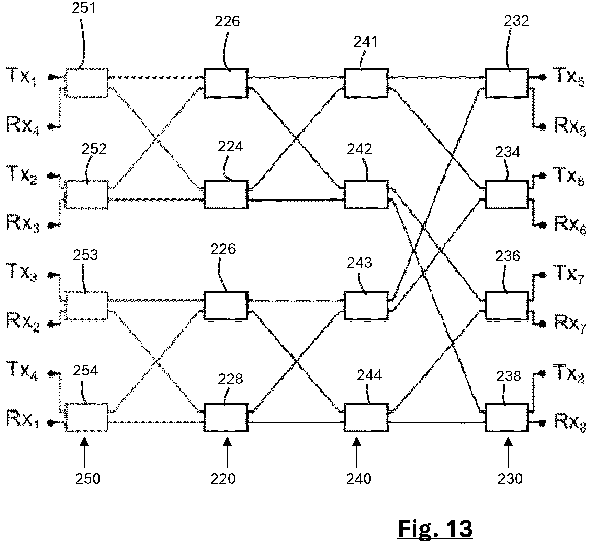

Referring to Figure 13, an 8x8 bidirectional switching architecture, or split polarization switching architecture, may be based on the double layer architecture of Figure 3. It includes all of the switching elements and connections of Figure 3, which are indicated by the same reference numerals and will not be described again. However to double the number of ports on each side, each of the switching cells 232, 234, 236, 238 on the second side B has both of the ports on its second side forming a port of the switching network. The four switching cells 232, 234, 236, 238 therefore provide eight ports in total. On the first side A of the network, the four switching cells 222, 224, 226, 228 making up the I/O array in the basic dilated banyan architecture, become an intermediate layer 220 in this architecture, each having all four of its ports connected, and a further linear array of 4x4 cells 251, 252, 253, 254 is provided on the first side, i.e. the outside, of that intermediate layer 220, forming the I/O layer 250 of this architecture. A first pair 251, 252 of this I/O layer 250 is connected to a first pair 222, 224 of the intermediate layer 220. Specifically each cell 251, 252 in the first pair of cells in the I/O layer 250 has one port connected to each of the associated pair of 2x2 cells 222, 224 in the intermediate layer 220. A second pair 253, 254 of this I/O layer 250 is connected to a second pair 226, 228 of the intermediate layer 220 in the same way. The eight ports on the first side A may be paired in the same way as described above with reference to Figure 7 or Figure 9, and the eight ports on the second side B may be paired together as described above with reference to Figure 7 or Figure 9.

As with the arrangement of Figure 6, the network of Figure 13 can be used as a basic block for scaling up. If this is to be done, one of the ports on the second side of each of the switching cells 232, 234, 236, 238 on the second side B of the network is not used, so those switching cells 232, 234, 236, 238 are operated as 2 x 1 cells, and the network operates as an 8 x 4 network. This can then be scaled up by combining four of these networks together and adding further cells as shown in Figure 6.

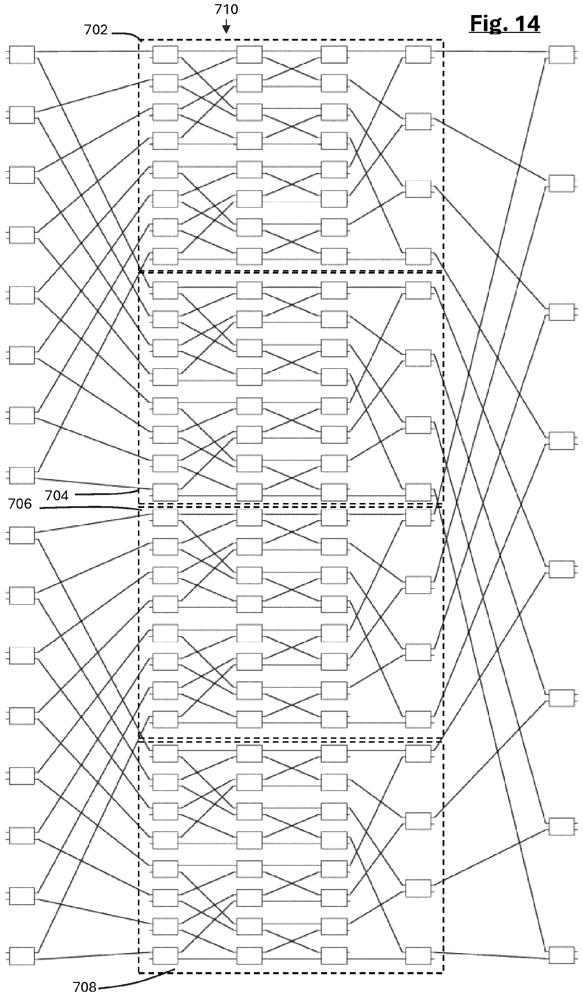

The architecture of Figure 12 can also be expanded further. Figure 14 shows a 16x16 paired port switching architecture, which again may be used for bidirectional transmission or split polarization, which has the overall structure of Figure 6, with each of the four blocks 702, 704, 706, 708 making up the central block 710 comprising an 8x4 network which is a network as shown in Figure 12 but with the 2x2 switching cells 132, 134, 136, 136 having one of their ports unused so they operate as 2x1 cells, as in the second side of the basic dilated banyan network of Figure 2. Similarly, the four central blocks 702, 704, 706, 708 could each be formed from the switch and select network of Figure 11, or the double layer architecture of Figure 13.

## Claims

1. A photonic switching architecture comprising:
a first I/O array of switching cells providing a plurality of pairs of first ports, each of the pairs comprising an input port and an output port;
a second I/O array of switching cells providing a plurality of pairs of second ports, each of the pairs comprising an input port and an output port;
a plurality of switching cells connected between the two I/O arrays and arranged to provide pairs of channels, each pair of channels connecting the input port and the output port of one of the pairs of first ports to the output port and the input port respectively of one of the pairs of second ports; wherein
the switching cells are operable to connect, in a strictly non-blocking manner, each of the pairs of first ports selectively to any respective one of the pairs of second ports via a respective pair of the channels.

2. A photonic switching architecture according to claim 1 comprising a switching network having a first array of four I/O switching cells on a first side, a second array of four I/O switching cells on a second side and a plurality of intermediate switching cells between the first and second arrays, with each of the I/O switching cells connected to two of the intermediate switching cells, the architecture further comprising:
four further I/O switching cells on the first side each of which is connected to the two of the intermediate cells to which a respective one of the first array of I/O switching cells is connected.

3. A photonic switching architecture comprising:
a first I/O array of switching cells providing a plurality of pairs of first ports;
a second I/O array of switching cells providing a plurality of pairs of second ports;
a plurality of switching cells connected between the two I/O arrays and arranged to provide pairs of channels, each pair of channels connecting one of the pairs of first ports to one of the pairs of second ports; wherein
the switching cells are operable to connect each of the pairs of first ports selectively to any respective one of the pairs of second ports via a respective pair of the channels;
the architecture comprising a switching network having a first array of four I/O switching cells on a first side, a second array of four I/O switching cells on a second side and a plurality of intermediate switching cells between the first and second arrays, with each of the I/O switching cells connected to two of the intermediate switching cells, the architecture further comprising:
four further I/O switching cells on the first side each of which is connected to the two of the intermediate cells to which a respective one of the first array of I/O switching cells is connected.

4. A photonic switching architecture according to claim 2 or claim 3 wherein the switching network is a dilated Banyan network.

5. A photonic switching architecture according to claim 2 or claim 3 wherein the switching network is a switch and select network.

6. A photonic switching architecture according to claim 1 comprising a double layer switching network having a first array of four I/O switching cells on a first side, a second array of four I/O switching cells on a second side and a plurality of intermediate switching cells between the first and second arrays, the architecture further comprising a further array of four further I/O switching cells on the first side of the first array of I/O switching cells, wherein each of the further I/O switching cells is a 2x2 switching cell connected to two cells of the first array of I/O switching cells.

7. A photonic switching architecture according to any preceding claim wherein there are n/2 pairs of first ports and n/2 pairs of second ports, the architecture comprising four n/2 x n/4 switching networks, the first array of I/O switching cells being connected to a first side of the four switching networks and the second array of I/O switching cells being connected to a second side of the four switching networks.

8. A photonic switching architecture comprising:
a first I/O array of switching cells providing a plurality of pairs of first ports;
a second I/O array of switching cells providing a plurality of pairs of second ports;
a plurality of switching cells connected between the two I/O arrays and arranged to provide pairs of channels, each pair of channels connecting one of the pairs of first ports to one of the pairs of second ports; wherein
the switching cells are operable to connect each of the pairs of first ports selectively to any respective one of the pairs of second ports via a respective pair of the channels; and
there are n/2 pairs of first ports and n/2 pairs of second ports, the architecture comprising four n/2 x n/4 switching networks, the first array of I/O switching cells being connected to a first side of the four switching networks and the second array of I/O switching cells being connected to a second side of the four switching networks.

9. A photonic switching architecture according to claim 7 or claim 8 wherein each of the first array of I/O switching cells is connected either to the first and second of the switching networks or the third and fourth of the switching networks, and each of the second array of I/O switching cells is connected either to the first and third of the switching networks or the second and fourth of the switching networks.

10. A photonic switching architecture according to any preceding claim wherein each of the pairs of channels is arranged to transmit signals in opposite directions between one of the pairs of first ports and one of the pairs of second ports.

11. A photonic switching architecture according to any preceding claim wherein the pairs of first ports are paired into groups of four first ports, the pairs of second ports are paired into groups of four second ports, and the pairs of channels are paired into groups of four channels, and each channel of each group of four channels is arranged to transmit a respective polarization component of signals in a respective direction between one of the groups of four first ports and one of the groups of four second ports.

12. A photonic switching architecture according to any preceding claim wherein the channels are arranged physically in two groups, and each pair of channels comprises one channel from each group.
